# EUROPÄISCHE PATENTANMELDUNG

(11) **EP 0 618 162 A2**
(43) Veröffentlichungstag der Anmeldung: **05.10.1994**
(21) Anmeldenummer: 93118741.3
(22) Anmeldetag: 22.11.1993
(51) Int. Cl.: B65H 19/18, C09J 7/02

(54) **Bahnverbindungsklebeband für eine neue Bahnrolle**

(30) Priorität: 19.01.1993 US 6356
(71) Anmelder: Heidelberger Druckmaschinen Aktiengesellschaft, D-69115 Heidelberg (DE)
(72) Erfinder: Bergeron, Eugene John, Stratham, NH 03885 (US)
(74) Vertreter: Stoltenberg, Heinz-Herbert Baldo

(57) **Zusammenfassung**

Die vorliegende Erfindung betrifft das automatische Verbinden einer neuen Bahnrolle (10) mit einer laufenden Bahn (8) und sieht eine neue Bahnrolle (10) vor, die mit Verbindungsklebebändern (40,80,90,120,130,170,180,220,240) ausgerüstet ist. Ein starkklebriges, doppelseitiges Halte- oder Befestigungsklebeband (40,80,120,170,220) stellt eine starke Verbindung zwischen der neuen Bahn (10) und der laufenden Bahn (8) her. Ein doppelseitiges Trennklebeband (20,100,140,190,250) ist mit einem starkklebrigen Klebstoff auf der einen Seite und einem schwachklebrigen Klebstoff auf der anderen Seite versehen und befestigt die erste Lage (16) auf der neuen Bahnrolle (10) vor dem Verbinden. Beim Verbinden der Bahnen (8,14) löst sich das Trennklebeband (20,100,140,190,250) an seiner schwachklebrigen Seite, so daß sich die neue Bahnrolle (10) abwickeln kann. Die doppelseitigen Klebebänder werden entweder direkt auf der neuen Bahnrolle (10) oder auf einem Trägerstreifen (60,110,160,230) angeordnet, welcher dann die Vorderkante (18) der neuen Bahnrolle (10) abdeckt.

## Beschreibung

Die Erfindung bezieht sich general auf das Verbinden von Materialbahnen, und im besonderen auf das automatische Verbinden einer neuen Rolle mit dem hinteren Ende einer laufenden Bahn in dem kontinuierlichen Arbeitsprozess einer Druckmaschine.

Zur Erzielung dieser Art des automatischen Verbindens wird eine neue Bahnrolle, bestehend aus einer um einen Rollenkern gewickelten neuen Bahn, während der Anlaufzeit auf die gleiche Rotationsgeschwindigkeit gebracht wie die laufende Bahn. Die neue Bahn wird dann mit der laufenden Bahn verbunden, oft unter Verwendung eines Klebstoffs, womit die erste Lage der neuen Bahnrolle mit dem hinteren Ende der zu Ende gehenden laufenden Bahn verbunden wird. In solch einem System taucht das Problem auf, daß bei der Anlaufrotation der neuen Bahnrolle die erste Lage lose herabzuhängen kommt und sich abwickelt, wenn diese nicht auf der Rolle festgehalten wird. Deshalb weist die neue Bahnrolle üblicherweise ein Mittel auf, wodurch die erste Lage der neuen Bahnrolle während deren Anlaufrotation auf ihrem Platz gehalten werden kann. Jedoch muß diese erste Lage nicht zu fest gehalten werden, denn sie muß sich beim Verbinden lösen können und der laufenden Bahn folgen.

Für das Festhalten der ersten Lage der neuen Bahnrolle vor dem Verbinden und das Herstellen einer Klebeverbindung wurde bei herkömmlichen Bahnverbindungstechniken doppelseitiges Klebeband verwendet, um die Bahnvorderkante und damit die erste Bahnlage auf der neuen Rolle festzuhalten. Bahnklebeband dieser Art ist offenbart in dem U.S. Patent No. 4,905,924 - Moore. In diesem Patent hält die eine Seite des Klebebandes die erste Lage einer neuen Bahnrolle fest, indem die Vorderkante der ersten Lage mit dem Klebeband bedeckt wird. Die andere Seite des Klebebandes trägt auf dem hinteren Bandteil eine Klebeschicht, auf welcher eine laufende Bahn haften kann. Wenn der hintere Teil des Klebebandes an der laufenden Bahn klebt, dann trennt sich das Klebeband entlang einem geprägten Profil, so daß sich die erste Lage der neuen Bahnrolle mit dem hinteren Ende der laufenden Bahn frei bewegen kann und der vordere Teil des Klebebandes an einer zweiten Lage der neuen Bahnrolle haften bleibt.

Das Klebeband des in dem genannten U.S. Patent beschriebenen Typs hat jedoch einige Nachteile. Zum ersten muß die Klebeverbindung zwischen der laufenden Bahn und der ersten Lage der neuen Bahnrolle stark genug sein, um das Klebeband zu trennen. In dem Fall, daß eine Trennung des Klebebandes nicht zustandekommt, kann die Klebeverbindung zwischen der laufenden Bahn und der ersten Lage der neuen Bahn unwirksam werden. Zum zweiten darf sich das Klebeband nicht zu einem verfrühten Zeitpunkt trennen.

Es ist eine Aufgabe der vorliegenden Erfindung, die neue Bahnrolle mit Verbesserungen zum Verbinden zu versehen, einschließlich eines verbesserten Klebebandes, das sich beim Verbinden der neuen Bahnrolle mit der laufenden Bahn leicht trennt und gleichzeitig verhindert, daß sich die neue Bahn vor dem Verbinden von der Rolle abwickelt.

Es ist eine weitere Aufgabe der vorliegenden Erfindung, die neue Bahnrolle mit einem Klebemittel zu versehen, das unterschiedliche Klebeeigenschaften aufweist, die bei der Verbindung ein müheloses Trennen der Vorderkante der neuen Bahn zulassen und dennoch ausreichende Haftung während der Anlaufrotation der neuen Rolle bieten.

Es ist eine weitere Aufgabe der vorliegenden Erfindung, ein müheloses Trennen der ersten Lage einer neuen Bahnrolle zu erzielen, indem Klebeband verwendet wird, das entlang einer darin vorgesehenen Perforierung abreißt, und vorzusehen, daß eine Klebeverbindung sich aufgrund einer schwächeren Klebrigkeit des angewandten Klebstoffs löst, falls das Klebeband beim Verbinden entlang der Perforierung nicht abreißen sollte.

Ferner ist es eine Aufgabe der vorliegenden Erfindung, eine Befestigung der ersten Lage einer neuen Bahnrolle während der Anlaufrotation durch Klebemittel vorzusehen, und zugleich Sorge zu tragen, daß nach dem Verbinden der Bahnen keine unbedeckten Klebeflächen bestehen.

Die vorliegende Erfindung sieht eine neue Bahnrolle vor, die folgende Merkmale umfaßt:
einen Rollenkern; eine um den Rollenkern gewickelte neue Bahn mit einer ersten Lage mit einer Vorderkante und einer zweiten Lage, wovon die erste Lage eine Innenfläche und eine Außenfläche aufweist; mindestens einen Streifen doppelseitiges Trennklebeband mit einem starkklebrigen Klebstoff auf der einen Klebeseite und einem schwachklebrigen Klebstoff auf der anderen Klebeseite; mindestens einen Streifen doppelseitiges Halteklebeband mit einem starkklebrigen Klebstoff auf beiden Klebeseiten; das Trennklebeband ist zwischen der Innenfläche der ersten Lage und der zweiten Lage nahe der Vorderkante angebracht und hält die Vorderkante während der Anlaufrotation der neuen Bahnrolle fest; und eine Klebeseite des Halteklebebandes ist auf der Außenfläche der ersten Lage nahe der Vorderkante angebracht, und die andere Klebeseite ist somit frei, um sich mit einer laufenden Bahn zu verbinden.

Die vorliegende Erfindung sieht auch ein Klebeband für das Verbinden einer ersten Lage einer neuen Bahnrolle mit einer laufenden Bahn und für das Festhalten der ersten Lage auf einer zweiten Lage der neuen Bahnrolle vor dem Verbinden vor, welches die folgenden Merkmale umfaßt: einen Trägerstreifen mit einer Innenfläche und einer Außenfläche; ein erstes Mittel zum Verbinden der Außenfläche des Trägerstreifens mit der laufenden Bahn; ein zweites Mittel zum Verbinden eines hinteren Teils des Trägerstreifens mit der ersten Lage der neuen Bahnrolle; und ein drittes Mittel zum Verbinden eines vorderen Teils des Trägerstreifens mit der zweiten Lage der neuen Bahnrolle, wobei das dritte Mittel es ermöglicht, daß sich beim Verbinden der vordere Teil des Trägerstreifens von der zweiten Lage der neuen Bahnrolle trennt.

Es ist ein Vorteil bei der vorliegenden Erfindung, daß der starkklebrige Klebstoff ein effektives Verbinden ermöglicht und zugleich der schwachklebrige Klebstoff und damit die erste Lage von der neuen Bahnrolle gelöst werden.

Ein weiterer Vorteil der vorliegenden Erfindung ist es, daß der schwachklebrige Klebstoff beim Verbinden ein müheloses Trennen der ersten Lage der neuen Bahnrolle ermöglicht und vor dem Verbinden diese erste Lage beim Rotieren der neuen Bahnrolle an dieser fixiert.

Ein weiterer Vorteil der vorliegenden Erfindung ist es, daß der schwachklebrige Klebstoff die Eigenschaft besitzt zu "schlupfen", wodurch zufolge eines temperatur- und feuchtigkeitsbedingten Schrumpfens der Papierlagen sich in dem Verbindungsprofil ergebende übermäßige Spannungen abgebaut werden.

Ein zusätzlicher Vorteil der vorliegenden Erfindung ist das Ankleben der Vorderkante der neuen Bahnrolle, wodurch verhindert wird, daß Luft unter die erste Lage der neuen Bahnrolle dringt und diese sich vorzeitig von der Bahnrolle abhebt.

Diese und andere Merkmale und Vorteile der Erfindung werden durch die folgende Beschreibung der Ausführungsbeispiele im Zusammenhang mit den beigefügten, nachstehend erläuterten Zeichnungen weiter verdeutlicht.
- Fig.: 1 ist eine Seitenansicht einer laufenden Bahn und einer neuen Bahnrolle, die auf das Verbinden mit der laufenden Bahn vorbereitet ist;
- Fig. 1A: ist eine perspektivische Darstellung einer neuen Bahnrolle;
- Fig. 2: ist eine seitliche Teilansicht einer neuen Bahnrolle im Bereich der Bahnvorderkante, gemäß einer Ausführung der vorliegenden Erfindung;
- Fig. 2A: ist eine seitliche Teilansicht der neuen Bahn nach dem Verbinden mit einer laufenden Bahn, die einen Effekt der Ausführung in Fig. 2 darstellt;
- Fig. 2B: ist eine Seitenansicht gemäß Fig. 2A, die nach dem Verbinden einen weiteren Effekt der Ausführung in Fig. 2 darstellt;
- Fig. 3: ist eine seitliche Teilansicht der neuen Bahnrolle in dem Bereich der Bahnvorderkante, die eine weitere Ausführung der Erfindung mit einem verbesserten Klebeband darstellt;
- Fig. 3A: ist eine seitliche Teilansicht der neuen Bahn nach dem Verbinden mit einer laufenden Bahn, die einen Effekt der Ausführung in Fig. 3 darstellt;
- Fig. 3B: ist eine Darstellung ähnlich der in Fig. 3A, die einen weiteren möglichen Effekt der Ausführung in Fig. 3 darstellt;
- Fig. 4: ist eine seitliche Teilansicht der neuen Bahnrolle in dem Bereich der Bahnvorderkante, die eine weitere Ausführung der Erfindung mit einem verbesserten perforierten Klebeband darstellt;
- Fig. 4A: ist eine seitliche Teilansicht der neuen Bahn nach dem Verbinden mit einer laufenden Bahn, die den Effekt der Ausführung in Fig. 4 nach dem Verbinden darstellt;
- Fig. 5: ist eine seitliche Teilansicht einer weiteren Ausführung der Erfindung in dem Bereich der Vorderkante der neuen Bahn;
- Fig. 5A: ist eine seitliche Teilansicht des Effekts der Ausführung der Erfindung in Fig. 5 nach dem Verbinden;
- Fig. 6: ist eine seitliche Teilansicht einer weiteren Ausführung der Erfindung in dem Bereich der Vorderkante der neuen Bahn;
- Fig. 6A: ist eine seitliche Teilansicht des Effekts der Ausführung in Fig. 6 nach dem Verbinden;
- Fig. 7: ist eine perspektivische Darstellung einer neuen Bahnrolle mit einem Spalt in der in Fig. 2 gezeigten Ausführung der Erfindung;
- Fig. 8: ist eine perspektivische Darstellung einer neuen Bahnrolle mit einem Spalt in den in den Fig. 3, 4, 5 und 6 gezeigten Ausführungen der Erfindung.

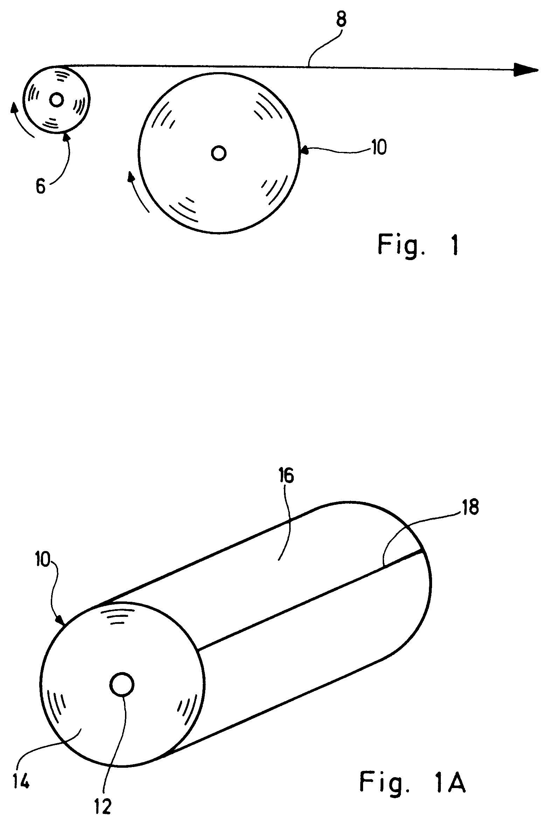

Zum Zwecke der Darstellung ist die vorliegende Erfindung in Verbindung mit Fig. 1 und 1A beschrieben. Fig. 1 zeigt eine laufende Rolle 6, von welcher eine Bahn 8 in eine nicht gezeigte Druckmaschine geführt wird. Es ist auch eine neue Bahnrolle 10 gezeigt, welche die laufende Bahnrolle 6 ersetzt, wenn diese zu Ende ist. Die neue Bahnrolle 10 hat einen Kern 12, um welchen eine neue Bahn 14 gewickelt ist. Wie in Fig. 1A gezeigt, weist die neue Bahnrolle 10 eine erste Lage 16 mit einer Vorderkante 18 auf. Wenn die laufende Rolle 6 zu Ende ist, wird die erste Lage 16 der neuen Bahnrolle 10 mit dem hinteren Ende der laufenden Bahn 8 verbunden. Die Verbindung kommt durch das Ankleben der ersten Lage 16 der neuen Bahnrolle 10 an die laufende Bahn 8 zustande, wie dies in den folgenden Ausführungsbeispielen beschrieben wird.

Vor dem Verbinden wird die neue Bahnrolle 10 beschleunigt und auf die Rotationsgeschwindigkeit der laufenden Bahnrolle 6 gebracht, um zusätzliche Bahnspannung zum Zeitpunkt des Verbindens zu vermeiden. Während dieser Anlaufrotation der neuen Bahnrolle 10 muß die Vorderkante 18 der ersten Lage 16 auf ihrem Platz gehalten werden. Wenn dies nicht geschieht, wird die Vorderkante 18 flattern und herabhängen und die neue Bahn 14 wird sich abwickeln, was das Verbinden unmöglich macht. Die Vorderkante 18 und die erste Lage 16 müssen jedoch bei der Verbindung mit der laufenden Bahn 8 auch freikommen können, damit sich die neue Bahn 14 von ihrer Rolle 10 abwickeln kann.

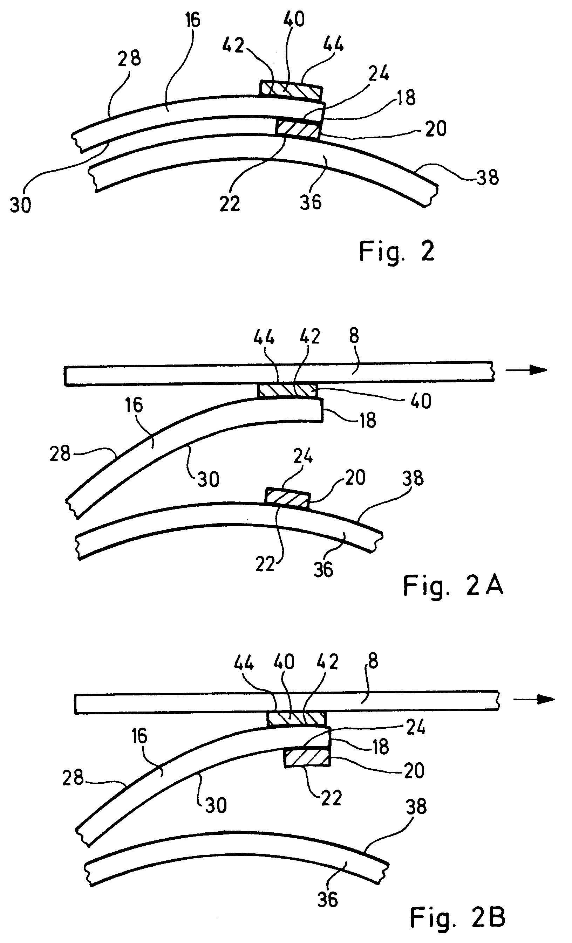

Die vorliegende Erfindung umfaßt die Verwendung von doppelseitigen Klebebändern, wovon manche der Klebeflächen eine unterschiedliches Klebrigkeit aufweisen, um ein wirksames Verbinden zu ermöglichen.
Eine Ausführung der vorliegenden Erfindung ist in Fig. 2 gezeigt. Bevor die neue Bahnrolle 10 nahe der laufenden Bahn 8 plaziert wird, wird diese für das Verbinden vorbereitet. Die neue Bahnrolle 10 hat eine erste Lage 16 mit einer Außenfläche 28 und einer Innenfläche 30, sowie eine zweite Lage 36 mit einer Außenfläche 38, wie in Fig. 2 gezeigt. Um die Bahnvorderkante 18 während der Rotation der neuen Bahnrolle 10 festzuhalten, wird ein langer Streifen doppelseitiges Trennklebeband 20 mit einer inneren Klebeseite 22 und einer äußeren Klebeseite 24 zwischen der Innenfläche 30 der ersten Lage 16 und der Außenfläche 38 der zweiten Lage 36 in der Nähe der Bahnvorderkante 18 angebracht. Das Trennklebeband 20 erstreckt sich über die gesamte Breite der neuen Bahn 14, wodurch ein Herabhängen der Bahn während der Anlaufrotation der neuen Bahnrolle 10 verhindert wird. Die Einzelheiten des Trennklebebandes 20 werden im folgenden erläutert.

Gemäß der in Fig. 2 gezeigten Ausführung ist die neue Bahnrolle 10 auch mit einem langen Streifen doppelseitigen Halteklebebandes 40 versehen, das eine innere Klebeseite 42 und eine äußere Klebeseite 44 aufweist. Die innere Klebeseite 42 ist mit der Außenfläche 28 der ersten Lage 16 in der Nähe der Bahnkante 18 verbunden. Die äußere Klebeseite 44 des Halteklebebandes 40 ist frei, um sich beim Kontakt mit der laufenden Bahn 8 mit dieser zu verbinden. Dieser Kontakt kann auf verschiedene Weise hergestellt werden, einschließlich mittels einer Bürste, die die laufende Bahn 8 an die neue Bahn 14 heranschiebt.

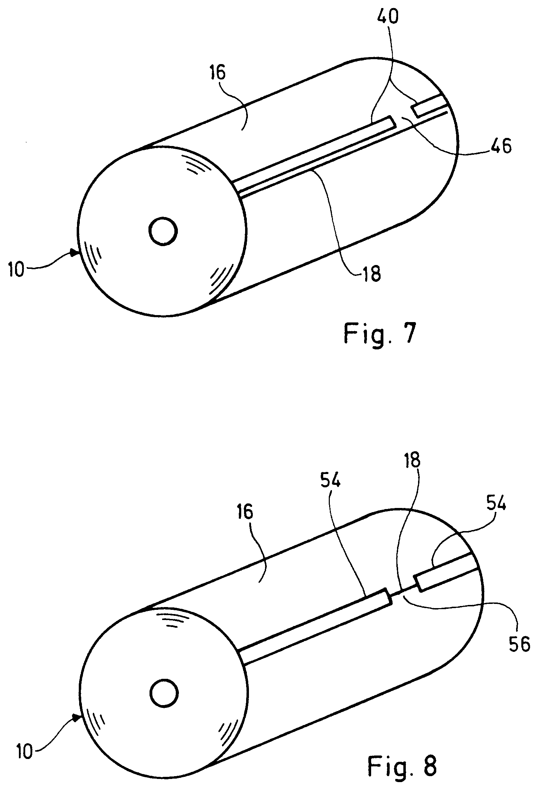

Wie in Fig. 7 gezeigt, erstreckt sich das Halteklebeband 40 über die gesamte Breite der neuen Bahnrolle 10. Es kann jedoch ein klebstoffreier Spalt 46 vorgesehen sein, wo ein Riemenantrieb die neue Bahnrolle 10 für die Anlaufrotation antreibt.

Zurückkommend auf Fig. 2, sind die innere Klebeseite 42 und die äußere Klebeseite 44 des Halteklebebandes 40 mit einem starkklebrigen Klebstoff versehen. Diese starke Klebrigkeit des Klebstoffs stellt eine starke Verbindung zwischen der ersten Lage 16 der neuen Bahn und der laufenden Bahn 8 her, wenn die äußere Klebeseite 44 mit der laufenden Bahn 8 in Kontakt kommt. Die Klebkraft des starkklebrigen Klebstoffs hängt ab von den charakteristischen Eigenschaften der jeweiligen Druckmaschine. Zumindest muß der starkklebrige Klebstoff genügend Klebkraft bieten, um die erste Lage der neuen Bahn fest mit der laufenden Bahn zu verbinden, und um diese Verbindung unter allen gegebenen Bedingungen innerhalb der Druckmaschine selbst aufrechterhalten zu können.

Beim Verbinden müssen die erste Lage 16 und die Vorderkante 18 imstande sein, sich von der zweiten Lage 36 zu trennen, so daß die neue Bahnrolle 10 sich abwickeln und die zu Ende gehende laufende Bahnrolle 6 ersetzen kann. Um diese Trennung zu ermöglichen, ist die äußere Klebeseite 24 des Trennklebebandes 20 mit einem schwachklebrigen Klebstoff versehen, im Gegensatz zu der starken Klebrigkeit des vorgenannten Klebstoffs, und die innere Klebeseite 22 ist mit einem starkklebrigen Klebstoff versehen. Die äußere Klebeseite 24 mit der schwächeren Klebrigkeit trennt sich, wenn durch das Halteklebeband 40 die erste Lage 16 der neuen Bahn von der laufenden Bahn 8 gezogen wird. Da beide Klebeseiten 42 und 44 des Halteklebebandes 40 mit starkklebrigem Klebstoff versehen sind, wird die starke Verbindung zwischen der ersten Lage 16 der neuen Bahn und der laufenden Bahn 8 nicht brechen. Vielmehr wird die schwächere Verbindung mit dem schwachklebrigen Klebstoff auf der äußeren Klebeseite 24 des Trennklebebandes nachgeben, wodurch sich die erste Lage 16 von der zweiten Lage 36 trennen und sich der Rest der neuen Bahn 14 abwickeln kann.

Fig. 2A zeigt den Effekt der Anordnung in Fig. 2 nach dem Verbinden. Die erste Lage 16 der neuen Bahn ist also mit der laufenden Bahn 8 durch doppelseitiges Halteklebeband 40 verbunden, wobei der starkklebrige Klebstoff eine starke Verbindung formt. In Fig. 2A trägt die Klebeseite 24 einen schwachklebrigen Klebstoff, und die Klebeseite 22 trägt einen starkklebrigen Klebstoff. Deshalb wird in dem gezeigten Verbindungsprozeß die mit dem schwachklebrigen Klebstoff gebildete schwache Verbindung zwischen der Klebeseite 24 und der Innenfläche 30 der ersten Lage 16 gebrochen. Das Trennklebeband 20 verbleibt auf der zweiten Lage 36, da es durch einen starkklebrigen Klebstoff auf seiner inneren Klebefläche 22 mit dieser verbunden ist.

Es ist zu bemerken, daß zur Ermöglichung einer Trennung der ersten Lage 16 beim Verbinden das Trennklebeband 20 gemäß Fig. 2 ebenso mit einem schwachklebrigen Klebstoff auf der inneren Klebeseite 22 und mit einem starkklebrigen Klebstoff auf der äußeren Klebeseite 24 ausgerüstet sein kann. Wie in Fig. 2B gezeigt, ist der einzige Effekt bei einem schwachklebrigen Klebstoff auf der Inneren Klebeseite 22 (anstatt eines schwachklebrigen Klebstoffs auf der äußeren Klebeseite 24 gemäß Fig. 2A) der, daß das Trennklebeband 20 mit der ersten Lage 16 anstatt mit der zweiten Lage 36 verbunden bleibt. Wie dargestellt, ist die erste Lage 16 der neuen Bahn mit der laufenden Bahn 8 durch ein Halteklebeband 40 verbunden, das mit starkklebrigem Klebstoff eine starke Verbindung bildet. In Fig. 2B ist die Klebeseite 22 mit einem schwachklebrigen Klebstoff und die Klebeseite 24 mit einem starkklebrigen Klebstoff versehen. Die mit dem schwachklebrigen Klebstoff gebildete schwache Klebeverbindung zwischen der Klebeseite 22 und der Außenfläche 38 der zweiten Lage 36 der neuen Bahn wird nach dem Verbinden unterbrochen, wie gezeigt.

In den Fig. 2a und 2B wird die Vorderkante 18 und die erste Lage 16 der neuen Bahn vor dem Verbinden durch das Trennklebeband 20 auf ihrem Platz gehalten. Die eine Seite des Trennklebebandes 20 mit schwächerer Klebrigkeit bildet eine schwache Klebeverbindung, jedoch sollte diese Verbindung stark genug sein, daß sie allen möglicherweise bei der Anlaufrotation der neuen Bahnrolle 10 vor dem Verbinden auftretenden Kräften standhalten kann. Insbesondere kann das Trennklebeband 20 entlang der gesamten Breite der Vorderkante 18 vorgesehen sein. Diese Anordnung verhindert, daß Luft zwischen die erste Lage 16 und die zweite Lage 36 der neuen Bahn gelangt, wodurch auch die Kräfte vermindert werden, welche die Verbindung mit dem schwachklebrigen Klebstoff brechen könnten. Es wird darauf hingewiesen, daß, wenn die schwachklebrige Verbindung stark genug ist, anstatt eines einzigen langen Klebestreifens mehrere Streifen oder Klebstoff intermittierend aufgebracht werden können.

Während die schwachklebrige Verbindung stark genug sein muß, um ein Sich-Trennen der ersten Lage 16 vor dem Verbinden zu verhindern, muß diese zugleich schwach genug sein, sodaß sich die erste Lage 16 beim Verbinden leicht trennt. Dies bedeutet daß die durch den schwachklebrigen Klebstoff gebildete Verbindung in genügendem Maße schwächer sein muß als die Verbindung mit dem starkklebrigen Klebstoff, und auch schwächer sein muß als die Bahn selbst, so daß die Trennung der ersten Lage 16 von der zweiten Lage 36 stattfinden kann. Der Fachmann kann je nach den gegebenen Bedingungen der verwendeten Druckmaschine, d.h. entsprechend der Rotationsgeschwindigkeit der Bahnrollen, der innerhalb der Druckmaschine auftretenden Kräfte und der Stärke der zu verwendenden Bahn, den erforderlichen starkklebrigen und schwachklebrigen Klebstoff für die Zwecke dieser Erfindung wählen.

Die Verwendung des Trennklebebandes 20 zum Festhalten der Vorderkante 18 vor dem Verbinden ist von Vorteil, da es leicht anzubringen ist und eine gleichmäßige Verbindung herstellt. Außerdem ist beim Gebrauch von Klebeband die Stärke der Verbindung leicht zu bestimmen, denn der genaue Bereich der Verbindung ist dann bekannt. Jedoch wäre es möglich, anstatt des Trennklebebandes 20 einen schwachklebrigen Klebstoff zu verwenden, der direkt zwischen der ersten Lage 16 und der zweiten Lage 36 aufgetragen wird. In diesem Fall würde nach dem Verbinden wahrscheinlich ein Teil des Klebstoffs an der Innenfläche 30 und ein Teil an der Außenfläche 38 haften. Anstatt des Halteklebebandes 40 wäre es auch möglich, einen starkklebrigen Klebstoff direkt auf die Außenfläche 28 der ersten Lage 16 nahe der Vorderkante 18 aufzutragen. Es wäre auch möglich, ein doppelseitiges Trennklebeband 20 mit schwachklebrigem Klebstoff auf beiden Seiten 22 und 24 zu verwenden.

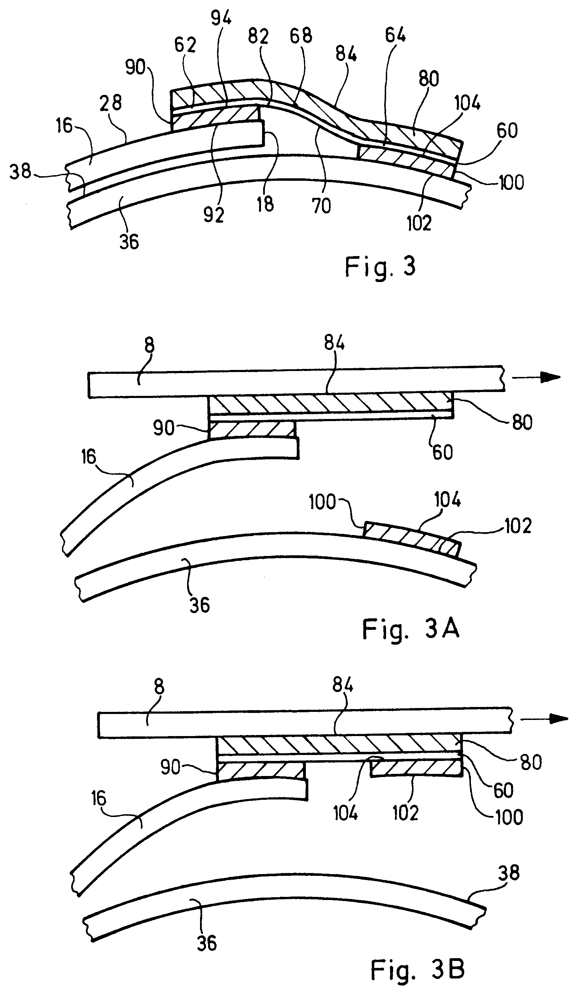

Fig. 3 zeigt eine andere Ausführung der vorliegenden Erfindung, wobei ein langer Trägerstreifen 60 doppelseitiges Klebeband die Vorderkante 18 der neuen Bahn 14 bedeckt, um die erste Lage auf der zweiten Lage 36 zu festzuhalten. Der Trägerstreifen 60 hat eine Außenfläche 68 und eine Innenfläche 70.

Ein langer Streifen doppelseitiges Halteklebebandes 80 mit einer inneren Klebeseite 82 und einer äußeren Klebeseite 84 wird entlang der Außenfläche 68 des Trägerstreifens 60 angebracht. Beide Seiten, nämlich die innere sowie die äußere Klebeseite 82 und 84, sind mit starkklebrigem Klebstoff versehen. Die innere Klebeseite 82 des Halteklebebandes 80 wird mit der Außenfläche 68 des Trägerstreifens 60 verbunden und bildet eine starke Klebeverbindung. Die äußere Klebeseite 84 bleibt frei für die Klebeverbindung der ersten Lage 16 der neuen Bahn mit der laufenden Bahn 6, wie im folgenden beschrieben.

Um den Trägerstreifen 60 mit der ersten Lage 16 der neuen Bahn zu verbinden, ist ein langer Streifen doppelseitiges Verbindungsklebeband 90 vorgesehen. Das Verbindungsklebeband 90 weist eine innere Klebeseite 92 und eine äußere Klebeseite 94 mit jeweils starkklebrigem Klebstoff auf. Die äußere Klebeseite 94 verbindet sich mit einem hinteren Teil 62 der Innenfläche 70 des Trägerstreifens 60. Die innere Klebeseite 92 verbindet sich mit der Außenfläche 28 der ersten Lage 16, nahe der Vorderkante 18 der neuen Bahn. Das Verbindungsklebeband 90 stellt dabei eine starke Verbindung zwischen dem Trägerstreifen 60 und der ersten Lage 16 her.

Um zu verhindern, daß die erste Lage 16 der neuen Bahn während der Rotation vor der Verbindung lose herabhängt, und um zu bewirken, daß der Trägerstreifen 60 und damit die erste Lage 16 sich nach dem Verbinden trennt, ist ebenfalls ein langer Streifen doppelseitiges Trennklebeband 100 vorgesehen. Das Trennklebeband 100 hat eine innere Klebeseite 102 und eine äußere Klebeseite 104. Die innere Klebeseite 102 verbindet sich mit der Außenfläche 38 der zweiten Lage 36, und die äußere Klebeseite 104 verbindet sich mit einem vorderen Teil 64 der Innenfläche 70 des Trägerstreifens 60. Die äußere Klebeseite 104 ist mit einem schwachklebrigen Klebstoff versehen, schwächer als der o. g. starkklebrige Klebstoff, und die innere Klebeseite 102 ist mit einem starkklebrigen Klebstoff versehen.

Fig. 3A zeigt den Effekt des schwachklebrigen Klebstoffs auf der äußeren Klebeseite 104 des Trennklebebandes 100 nach dem Verbinden. Beim Kontakt der laufenden Bahn 8 mit der äußeren Klebeseite 84 des Halteklebebandes 80, wird eine Verbindung mit starkklebrigem Klebstoff zwischen dem Trägerstreifen 60 und der laufenden Bahn 8 gebildet. Dann zieht die laufende Bahn 8 den Trägerstreifen 60, und durch das Verbindungsband 90 zieht dieser wiederum die erste Lage 16. Zugleich wird die schwache Klebeverbindung zwischen dem Trägerstreifen 60 und dem Trennklebeband 100, die sich mit der äußeren Klebeseite 104 gebildet hat, gelöst. Somit ist die erste Lage 16 der neuen Bahn 14 frei, um sich abzuwickeln und der laufenden Bahn 8 zu folgen. Infolge der mit seiner inneren Klebeseite 102 gebildeten starken Verbindung bleibt das Trennklebeband 100 mit der zweiten Lage 36 verbunden.

Es wird darauf hingewiesen, daß das Trennklebeband in Fig. 3 ebenso den schwachklebrigen Klebstoff auf der inneren Klebeseite 102 und den starkklebrigen Klebstoff auf der äußeren Klebeseite 104 haben könnte. Der einzige Unterschied liegt darin, daß, wenn sich der schwachklebrige Klebstoff auf der inneren Klebeseite 102 befindet, das Trennklebeband 100 auf dem Trägerstreifen 60 verbleibt. Fig. 3B zeigt den Effekt nach dem Verbinden, wenn sich der schwachklebrige Klebstoff auf der inneren Klebeseite 102 (anstatt auf der äußeren Klebeseite 104, wie in Fig. 3A gezeigt) befindet. Beim Kontakt der laufenden Bahn 8 mit der äußeren Klebeseite 84 des Halteklebebandes 80 wird eine Verbindung mit starkklebrigem Klebstoff zwischen dem Trägerstreifen 60 und der laufenden Bahn 8 gebildet. Die laufende Bahn 8 zieht dann den Trägerstreifen 60, welcher wiederum durch das Verbindungsklebeband 90 die erste Lage 16 zieht. Zugleich wird die mit der inneren Klebeseite 102 gebildete schwache Klebeverbindung zwischen der zweiten Lage 36 und dem Trennklebeband 100 gelöst. Das Trennklebeband 100 bleibt durch die mit dem starkklebrigen Klebstoff auf seiner äußeren Klebeseite 104 gebildete starke Verbindung mit dem Trägerstreifen 60 verbunden. Somit ist die erste Lage 16 der neuen Bahn 14 frei, sich abzuwickeln und der laufenden Bahn 8 zu folgen.

Es wird darauf hingewiesen, daß das Trennklebeband 100, das Verbindungsklebeband 90 und das Halteklebeband 80 alle mit dem Trägerstreifen 60 verbunden werden können, bevor die neue Bahnrolle 10 vorbereitet wird. Die vollständige Montage, bestehend aus Trägerstreifen 60 und den Klebebändern 80, 90 und 100 kann dann als ein einziger langer Verbundstreifen oder als eine Reihe von Verbundstreifen direkt über der Bahnkante 18 angebracht werden. Alternativ können gemäß dieser Ausführung der Trägerstreifen 60 und die Klebebänder 80, 90 und 100 direkt auf die neue Bahnrolle 10 aufgebracht werden.

Während die Ausführung in Fig. 3 die Verwendung von doppelseitigen Klebebändern 80, 90 und 100 für das Verbinden zeigt, ist es auch denkbar, daß das Halteklebeband 80 mit einem direkt auf den Trägerstreifen 60 oder die laufende Bahn 8 aufzutragenden starkklebrigen Klebstoff ersetzt werden könnte. Das Verbindungsklebeband 90 könnte ebenso mit einem direkt aufgetragenen starkklebrigen Klebstoff ersetzt werden. Außerdem könnte ein schwachklebriger Klebstoff das Trennklebeband 100 ersetzen. Es sollte erkannt werden, daß durch direktes Auftragen dieser Klebstoffe auf den Trägerstreifen 60 vor dem Verbinden ein Verbindungsklebeband vorgefertigt werden kann, das auf der neuen Bahnrolle 10 leicht anzubringen ist. Vorgefertigtes Klebeband ist einem direkten Auftragen des Klebstoffs vorzuziehen, da es leicht angebracht werden kann, eine gleichmäßige Klebeverbindung herstellt und nicht verschmiert.

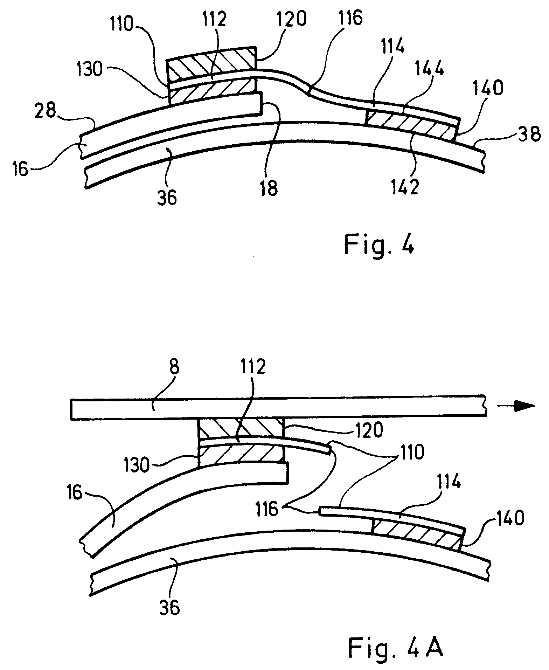

Fig. 4 zeigt eine der in Fig. 3 gezeigten ähnliche Ausführung der Erfindung mit den im folgenden beschriebenen Unterschieden. Die Ausführung gemäß Fig. 4 umfaßt einen Trägerstreifen 110 mit einem hinteren Teil 112 und einem vorderen Teil 114. Es ist ein doppelseitiges Verbindungsklebeband 130 vorgesehen, um den hinteren Teil 112 des Trägerstreifens 110 mit der ersten Lage 16 nahe der Vorderkante 18 der neuen Bahn zu verbinden. Es ist ein doppelseitiges Halteklebeband 120 vorgesehen, um beim Verbinden der Bahnen den Trägerstreifen 110 mit der laufenden Bahn 8 zu verbinden (wie in Fig. 4A gezeigt). Das Halteklebeband 120 und das Verbindungsklebeband 130 sind beide mit einem starkklebrigen Klebstoff auf beiden Seiten versehen, wie bei der in Fig. 3 gezeigten Ausführung. Jedoch das Halteklebeband 120 der Ausführung in Fig. 4 verbindet sich mit dem Trägerstreifen 110 nur auf dessen hinterem Teil 112.

Der Trägerstreifen 110 ist auch mit einer Perforierung 116 versehen. Die Perforierung 116 erstreckt sich entlang der gesamten Länge des Trägerstreifens 110 und ermöglicht die Trennung des vorderen Teils 114 von dem hinteren Teil 112, wie im folgenden beschrieben.

Zwischen der zweiten Lage 36 der neuen Bahn und dem vorderen Teil 114 des Trägerstreifens 110 wird ein doppelseitiges Trennklebeband 140 mit einer inneren Klebeseite 142 und einer äußeren Klebeseite 144 angebracht. Im Gegensatz zu der Ausführung in Fig. 3 trennt sich das Trennklebeband 140 nach dem Verbinden jedoch nicht unbedingt, denn die Klebeseiten 142 und 144 bilden Verbindungen, die stärker sind als der Trägerstreifen 110 an der Perforierung 116. Deshalb wird der Trägerstreifen 110 beim Verbinden entlang der Perforierung 116 reißen, wie im Zusammenhang mit Fig. 4A näher beschrieben.

In Fig. 4A ist das Verbinden vollzogen, wenn die laufende Bahn 8 durch das Halteklebeband 120 mit dem hinteren Teil 112 des Trägerstreifens 110 verbunden ist. Die erste Lage 16 der neuen Bahn 14 folgt dem hinteren Teil 112 des Trägerstreifen 110 und damit der laufenden Bahn 8, denn die erste Lage 16 ist durch das Verbindungsklebeband 130 mit dem hinteren Teil 112 verbunden. Wenn der hintere Teil 112 von der laufenden Bahn 8 gezogen wird, dann reißt der Trägerstreifen 110 entlang der Perforierung 116 ab, da der vordere Teil 114 von dem Trennklebeband 140 auf der zweiten Lage 36 gehalten wird. Durch die Trennung entlang der Perforierung 116 kann sich dann die erste Lage 16 abwickeln und der laufenden Bahn 8 folgen. Das Trennklebeband 140 verbleibt zwischen dem vorderen Teil 114 des Trägerstreifens 110 und der zweiten Lage 36 der neuen Bahn.

Solch ein Abreiß- oder Trennsystem ist bekannt, wie hier einleitend beschrieben. Die Verwendung von doppelseitigen Klebebändern wie das Halteklebeband 120, das Verbindungsklebeband 130 und das Trennklebeband 140 ermöglichen jedoch ein effizientes und effektives Vorbereiten der neuen Bahnrolle 10. Darüberhinaus kann es vorkommen, daß das Abreißen nicht immer in geeigneter Weise geschieht, auch wenn es durch eine Perforierung erleichtert wird. Deshalb wird vorgeschlagen, daß eine der Klebeseiten 142 und 144 des Trennklebebandes 140 mit einem schwachklebrigen Klebstoff, schwächer als die starkklebrigen Klebstoffe auf dem Halteklebeband 120 und dem Verbindungsklebeband 130, versehen sein sollte. Diese Anordnung stellt eine Reserve für das Trennen der ersten Lage 16 dar, denn wenn der Trägerstreifen 110 nicht abreißt, so wird sich der vordere Teil 114 des Trägerstreifens 110 von der zweiten Lage 36 auf der schwachklebrigen Klebeseite des Trennklebebandes 140 ablösen. Dann sind der Trägerstreifen 110 zusammen mit der ersten Lage 16 und der laufenden Bahn 8 frei, sich zu bewegen und die erste Lage 16 kann sich abwickeln.

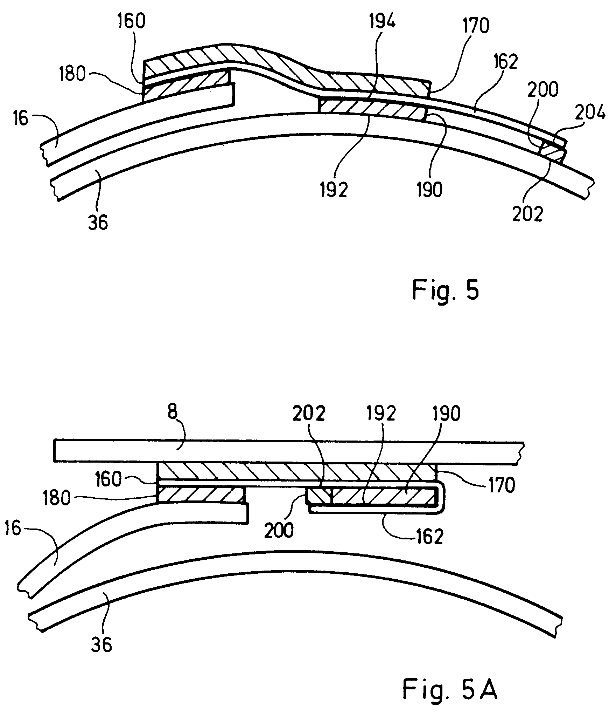

Fig. 5 stellt eine Variation der in Fig. 3 gezeigten Ausführung dar. Es ist zu bemerken, daß bei den in den Fig. 3A und 3B gezeigten Ausführungen eine schwackklebrige Klebeseite des Trennklebebandes 100 nach dem Verbinden unbedeckt bleibt. Obwohl diese unbedeckte Seite meist keine Probleme verursacht, sieht die in Fig. 5 gezeigte Ausführung vor, daß diese unbedeckte schwachklebrige Klebeseite bedeckt wird, bevor diese durch eine Druckmaschine fortbewegt wird. Wie bei der in Fig. 3 gezeigten Ausführung umfaß auch die Ausführung in Fig. 5 einen Trägerstreifen 160, ein Halteklebeband 170, ein Verbindungsklebeband 180 und ein Trennklebeband 190. Das Halteklebeband 170 und das Verbindungsklebeband 180 sind beide doppelseitige Klebebänder mit starkklebrigem Klebstoff auf beiden Seiten. Das Trennklebeband 190 hat eine innere Klebeseite 192 mit schwachklebrigem Klebstoff und eine äußere Klebeseite 194 mit starkklebrigem Klebstoff.

Der Trägerstreifen 160 hat einen verlängerten Teil 162, welcher sich über das Trennklebeband 192 hinaus erstreckt. Ein Abdeckstreifen 200 ist zwischen dem Ende des verlängerten Teils 162 und der zweiten Lage 36 angebracht. Das Abdeckstreifen 200 hat eine innere Klebeseite 202 mit einem schwachklebrigen Klebstoff und eine äußere Klebeseite 204 mit einem starkklebrigen Klebstoff.

Der Effekt des verlängerten Teils 162 des Trägerstreifens 160 und des Abdeckklebebandes 200 ist in Fig. 5A gezeigt. Wenn die laufende Bahn 8 durch das Halteklebeband 170 mit dem Trägerstreifen 160 verbunden ist, werden durch das Verbindungsklebeband 180 die erste Lage 16 und das Trennklebeband 190 von der zweiten Lage 36 hinweggezogen. Jedoch bleibt aufgrund des Abdeckklebebandes 200 das Ende des verlängerten Teils 162 auf seinem Platz. Wenn die laufende Bahn 8 zusammen mit der ersten Lage 16 vorwärtsgezogen wird, faltet sich der verlängerte Teil 162 unter dem sich trennenden Trennklebeband 190 und verbindet sich mit der inneren Klebeseite 192 des Trennklebebandes 190. Außerdem löst sich auch der Abdeckstreifen 200 an der schwachklebrigen Verbindung, die zwischen dem Abdeckstreifen 200 und der zweiten Lage 36 mit der inneren Klebeseite 202 besteht. Die innere Klebeseite 202 verbindet sich dann mit der Unterseite des Trägerstreifens 160 wie in Fig. 5A gezeigt. Somit sieht diese Ausführung vor, daß keine Klebefläche unbedeckt ist, wenn die neue Bahn durch die Druckmaschine bewegt wird.

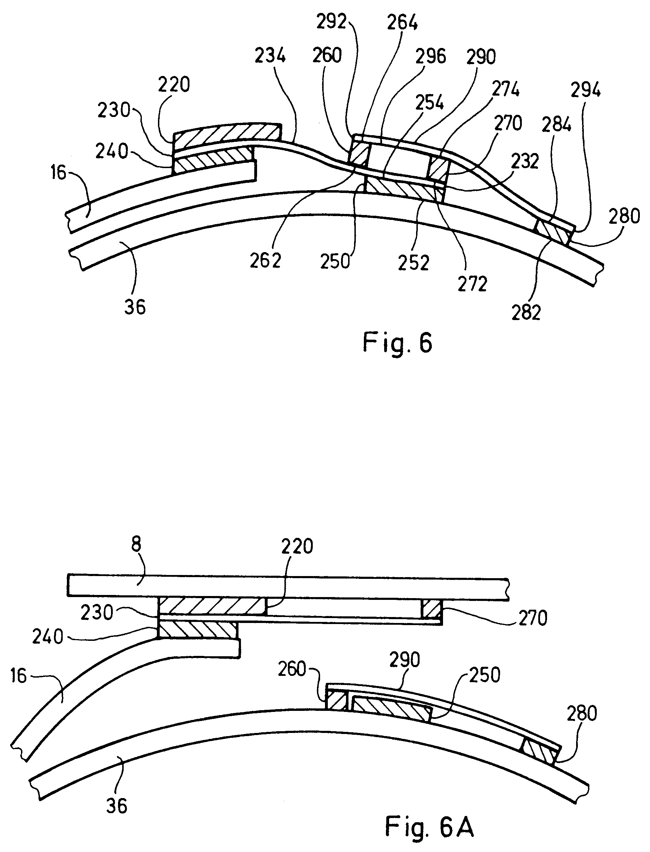

Eine weitere, der in Fig. 3 gezeigten ähnliche Ausführung ist in Fig. 6 dargestellt. Diese Ausführung vermeidet ebenfalls, daß eine nicht bedeckte Klebefläche durch die Druckmaschine bewegt wird. Wie in Fig. 6 gezeigt, umfaßt diese Ausführung ein Halteklebeband 220, ein Verbindungsklebeband 240, ein Trennklebeband 250 und einen Trägerstreifen 230. Das Halteklebeband 220 ist nur an dem hinteren Ende der Außenfläche 234 des Trägerstreifens 230 vorgesehen.

Das Halteklebeband 220 und das Verbindungsklebeband 240 sind doppelseitige Klebebänder mit starkklebrigem Klebstoff auf beiden Seiten. Das Trennklebeband 250 ist mit einem starkklebrigen Klebstoff auf seiner inneren Klebeseite 252 und mit einem schwachklebrigen Klebstoff auf seiner äußeren Klebeseite 254 versehen.

Die Anordnung in Fig. 6 umfaßt ferner einen langen Abdeckstreifen 290, welcher sich über die Vorderkante 232 des Trägerstreifens 230 erstreckt. Der Abdeckstreifen 290 hat eine Hinterkante 292 und eine Vorderkante 294. Zwischen dem Abdeckstreifen 290 und dem Trägerstreifen 230 ist ein doppelseitiges Löseklebeband 260 mit einer inneren Klebefläche 262 und einer äußeren Klebefläche 264 vorgesehen. Die äußere Klebefläche 264 ist mit einem starkklebrigen Klebstoff versehen und mit der Innenfläche 296 des Abdeckstreifens 290 nahe an dessen Hinterkante 292 verbunden. Die innere Klebefläche 262 ist mit einem schwachklebrigen Klebstoff versehen und bildet eine schwache Verbindung mit der Außenfläche 234 des Trägerstreifens 230.

Zwischen dem Abdeckstreifen 290 and dem Trägerstreifen 230 ist auch ein langer Streifen Haftklebeband 270 vorgesehen. Das Haftklebeband 270 hat eine innere Klebeseite 272 mit einem starkklebrigen Klebstoff und eine äußere Klebeseite 274 mit einem schwachklebrigen Klebstoff. Die innere Klebeseite 272 ist mit der Außenfläche 234 des Trägerstreifens 230 nahe der Vorderkante 232 verbunden. Die äußere Klebeseite 274 bildet eine schwache Verbindung mit der Innenfläche 296 des Abdeckstreifens 290.

In der Ausführung gemäß Fig. 6 ist auch ein langer Streifen doppelseitiges Sicherungsklebeband 280 mit einer inneren Klebeseite 282 und einer äußeren Klebeseite 284 vorgesehen. Beide Seiten 282 und 284 sind mit starkklebrigem Klebstoff versehen. Das Sicherungsklebeband 280 verbindet die Innenfläche 296 des Abdeckstreifens 290 mit der zweiten Lage 36, wie gezeigt.

Der Effekt der Anordnung der Ausführung gemäß Fig. 6 nach dem Verbinden ist in Fig. 6A gezeigt. Beim Verbinden wird durch den Trägerstreifen 230 und das Verbindungsklebeband 240 eine Klebeverbindung zwischen der laufenden Bahn 8 und dem Halteklebeband 220, das die erste Lage 16 vorwärts zieht, hergestellt. Wenn das Halteklebeband 220 und der Trägerstreifen 230 vorwärts gezogen werden, dann werden die schwachen Verbindungen mit der inneren Klebeseite 262 des Löseklebebandes 260, der äußeren Klebeseite 274 des Haftklebebandes 270 und der äußeren Klebeseite 254 des Trennklebebandes 250 gebrochen. Der Bruch dieser schwachen Verbindungen erlaubt es dem Abdeckstreifen 290 zurückzufallen und das Trennklebeband 250 abzudecken, wie in Fig. 6A gezeigt. Der Bruch dieser schwachen Verbindungen erlaubt es auch dem Haftklebeband 270, nach oben zu schwingen und eine Klebeverbindung mit der laufenden Bahn 8 einzugehen, wie gezeigt. Dieser gesamte Prozeß sieht vor, daß keine unbedeckten Klebeflächen durch die Druckmaschine bewegt werden.

Wie in Fig. 8 gezeigt, erstrecken sich alle in den Ausführungen gemäß den Fig. 3, 4, 5 und 6 vorgesehenen Trägerstreifen und doppelseitige Klebebänder über die gesamte Breite der neuen Bahnrolle 10, was mit der Bezugsziffer 54 gekennzeichnet ist. Es kann jedoch ein Spalt 56 für einen klebstoffreien Bereich vorgesehen sein, wo ein Riemenantrieb die neue Bahnrolle 10 während der Anlaufrotation beschleunigen kann. Ferner kann es sein, daß zur Schaffung eines klebstoffreien Antriebsbereichs nur das in den Fig. 3, 4, 5 und 6 gezeigte unbedeckte doppelseitige Halteklebeband mit einem Spalt versehen wird, während die anderen Klebebänder und der Trägerstreifen sich über die gesamte Breite der neuen Bahnrolle 10 erstrecken. Bei allen oben beschriebenen Ausführungen besteht die Möglichkeit, daß anstatt eines einzigen langen Streifens über die gesamte Breite der neuen Bahnrolle 10 einige einzelne Streifen des Klebematerials entlang der Vorderkante 18 der neuen Bahnrolle 10 angebracht werden.

Obwohl die verschiedenen bevorzugten Ausführungen der vorliegenden Erfindung besonders im Zusammenhang mit einem automatischen Bahnverbindungssystem, wobei die neue Bahnrolle während der Anlaufzeit rotiert wird, offenbart worden sind, kann die Erfindung auch im Zusammenhang mit einem System angewandt werden, wobei die laufende Bahn und die neue Bahnrolle stationär sind.

### Bezugszeichenliste

- 6: laufende Bahnrolle
- 8: laufende Bahn
- 10: neue Bahnrolle
- 12: Rollenkern der neuen Bahnrolle
- 14: neue Bahn
- 16: erste Lage der neuen Bahn
- 18: Vorderkante der neuen Bahn
- 20: Trennklebeband
- 22: innere Klebeseite des Bandes 20
- 24: äußere Klebeseite des Bandes 20
- 28: Außenfläche der ersten Lage 16
- 30: Innenfläche der ersten Lage 16
- 36: zweite Lage der neuen Bahn
- 38: Außenfläche der zweiten Lage
- 40: Halteklebeband
- 42: innere Klebeseite des Bandes 40
- 44: äußere Klebeseite des Bandes 40
- 46: klebstoffreier Spalt des Bandes 40
- 54: Klebebänder über die Breite der neuen Bahnrolle
- 60: Trägerstreifen
- 62: hinterer Teil der Innenfläche 70 des Trägerstreifens 60
- 64: vorderer Teil der Innenfläche 70 des Trägerstreifens 60
- 68: Außenfläche des Trägerstreifens 60
- 70: Innenfläche des Trägerstreifens 60
- 80: Halteklebeband
- 82: innere Klebeseite des Bandes 80
- 84: äußere Klebeseite des Bandes 80
- 90: Verbindungsklebeband
- 92: innere Klebeseite des Bandes 90
- 94: äußere Klebeseite des Bandes 90
- 100: Trennklebeband
- 102: innere Klebeseite des Bandes 100
- 104: äußere Klebeseite des Bandes 100
- 110: Trägerstreifen
- 112: hinterer Teil des Trägerstreifens 110
- 114: vorderer Teil des Trägerstreifens 110
- 116: Perforierung entlang dem Trägerstreifen 110
- 120: Halteklebeband
- 130: Verbindungsklebeband
- 140: Trennklebeband
- 142: innere Klebeseite des Bandes 140
- 144: äußere Klebeseite des Bandes 140
- 160: Trägerstreifen
- 162: verlängerter Teil des Trägerstreifens 160
- 170: Halteklebeband
- 180: Verbindungsklebeband
- 190: Trennklebeband
- 192: innere Klebeseite des Bandes 190
- 194: äußere Klebeseite des Bandes 190
- 200: Abdeckklebeband
- 202: innere Klebeseite des Bandes 200
- 204: äußere Klebeseite des Bandes 200
- 220: Halteklebeband
- 230: Trägerstreifen
- 232: vorderes Ende des Trägerstreifens 230
- 234: Außenfläche des Trägerstreifens 230
- 240: Verbindungsklebeband
- 250: Trennklebeband
- 252: innere Klebeseite des Bandes 250
- 254: äußere Klebeseite des Bandes 250
- 260: Löseklebeband
- 262: Innere Klebeseite des Bandes 260
- 264: äußere Klebeseite des Bandes 260
- 270: Haftklebeband
- 272: innere Klebeseite des Bandes 270
- 274: äußere Klebeseite des Bandes 270
- 280: Sicherungsklebeband
- 282: innere Klebeseite des Bandes 280
- 284: äußere Klebeseite des Bandes 280
- 290: Abdeckstreifen
- 292: Hinterkante des Abdeckstreifens 290
- 294: Vorderkante des Abdeckstreifens 290
- 296: Innenfläche des Abdeckstreifens 290

## Patentansprüche

1. Neue Bahnrolle, die folgende Merkmale umfaßt:
einen Rollenkern;
eine um den Rollenkern (12) gewickelte neue Bahn (14) mit einer ersten Lage (16) mit einer Vorderkante (18) und einer zweiten Lage (36), wovon die erste Lage (16) eine Innenfläche (30) und eine Außenfläche (28) aufweist;
mindestens einen Streifen doppelseitiges Trennklebeband (20, 100, 140, 190, 250) mit einem starkklebrigen Klebstoff auf der einen Klebeseite (22, 24, 102, 104, 142, 194, 252) und einem schwachklebrigen Klebstoff auf der anderen Klebeseite (22, 24, 102, 104, 192, 254);
mindestens einen Streifen doppelseitiges Halteklebeband (40, 80, 120, 170, 220) mit einem starkklebrigen Klebstoff auf beiden Klebeseiten (42, 44, 82, 84);
das Trennklebeband (20, 100, 140, 190, 250) ist zwischen der Innenfläche (30) der ersten Lage (16) und der zweiten Lage (36) nahe der Vorderkante (18) angebracht und hält die Vorderkante (18) während einer Anlaufrotation der neuen Bahnrolle (10) fest; und
eine Klebeseite (42, 82) des Halteklebebandes (40, 80, 120, 170, 220) ist auf der Außenfläche der ersten Lage (16) nahe der Vorderkante (18) angebracht, und die andere Klebeseite (44, 84) ist somit frei, um sich mit einer laufenden Bahn (8) zu verbinden.

2. Neue Bahnrolle gemäß Anspruch 1,
**dadurch gekennzeichnet**,
daß ein einziger langer Streifen Trennklebeband (20, 100, 140, 190, 250) zwischen der ersten Lage (16) und der zweiten Lage (36) angebracht ist.

3. Neue Bahnrolle gemäß Anspruch 2,
**dadurch gekennzeichnet**,
daß ein einziger langer Streifen Halteklebeband (40, 80, 120, 170, 220) auf der Außenfläche (28) der ersten Lage (16) angebracht ist.

4. Neue Bahnrolle gemäß Anspruch 3,
**dadurch gekennzeichnet,**
daß der einzige lange Streifen Halteklebeband (40, 80, 120, 170, 220) einen Spalt (46) aufweist.

5. Neue Bahnrolle gemäß Anspruch 1,
**dadurch gekennzeichnet,**
daß mehrere Streifen Trennklebeband (20, 100, 140, 190, 250) zwischen der ersten Lage (16) und der zweiten Lage (36) angebracht sind; und daß mehrere Streifen Halteklebeband (40, 80, 120, 170, 220) auf der Außenfläche (28) der ersten Lage (16) angebracht sind.

6. Klebeband zum Verbinden einer ersten Lage (16) einer neuen Bahnrolle (10) mit einer laufenden Bahn (8) und zum Halten der ersten Lage (16) auf der zweiten Lage (36) der neuen Bahnrolle vor dem Verbinden, welches die folgenden Merkmale umfaßt:
einen Trägerstreifen (60, 110, 160, 230) mit einer Innenfläche (70) und einer Außenfläche (68, 234);
ein erstes Mittel zum Verbinden der Außenfläche des Trägerstreifens (60, 110, 160, 230) mit der laufenden Bahn (8);
ein zweites Mittel zum Verbinden eines hinteren Teils (62, 112) des Trägerstreifens (60, 110, 160, 230) mit der ersten Lage (16) der neuen Bahnrolle (10); und ein drittes Mittel zum Verbinden eines vorderen Teils (64, 114) des Trägerstreifens (60, 110, 160, 230) mit der zweiten Lage (36) der neuen Bahnrolle (10),
wobei das dritte Mittel es vor dem Verbinden der Bahnen (8, 10) ermöglicht, daß der vordere Teil (64, 114) des Trägerstreifens (60, 110, 160, 230) sich von der zweiten Lage (36) der neuen Bahnrolle (10) trennt.

7. Klebeband gemäß Anspruch 6,
**dadurch gekennzeichnet**,
daß das erste Mittel mindestens ein Streifen doppelseitiges Halteklebeband (40, 80, 120, 170, 220) ist, das auf beiden Klebeseiten einen starkklebrigen Klebstoff aufweist.

8. Klebeband gemäß Anspruch 6,
**dadurch gekennzeichnet**,
daß das zweite Mittel mindestens ein Streifen doppelseitiges Verbindungsklebeband (90, 130, 180, 240) ist, das auf beiden Klebeseiten (92, 94) einen starkklebrigen Klebstoff aufweist.

9. Klebeband gemäß Anspruch 6,
**dadurch gekennzeichnet**,
daß das dritte Mittel mindestens ein Streifen doppelseitiges Trennklebeband (20, 100, 140, 190, 250) ist, das auf der einen Klebeseite einen starkklebrigen Klebstoff und auf der anderen Klebeseite einen schwachklebrigen Klebstoff aufweist.

10. Klebeband gemäß Anspruch 6,
**dadurch gekennzeichnet**,
daß das erste Mittel mindestens ein Streifen doppelseitiges Halteklebeband (40, 80, 120, 170, 220) ist, das auf beiden Klebeseiten einen starkklebrigen Klebstoff aufweist;
daß das zweite Mittel mindestens ein Streifen doppelseitiges Verbindungsklebeband-(90, 130, 180, 240) ist, das auf beiden Klebeseiten einen starkklebrigen Klebstoff aufweist;
und daß das dritte Mittel mindestens ein Streifen doppelseitiges Trennklebeband (20, 100, 140, 190, 250) ist, das auf der einen Klebeseite einen starkklebrigen Klebstoff und auf der anderen Klebeseite einen schwachklebrigen Klebstoff aufweist.

11. Klebeband gemäß Anspruch 10,
**dadurch gekennzeichnet**,
daß das Halteklebeband (120, 170, 220) auf der Außenfläche des hinteren Teils des Trägerstreifens (110, 160, 230) angebracht ist.

12. Klebeband gemäß Anspruch 11,
**dadurch gekennzeichnet**,
daß der Trägerstreifen (110) mit einer Perforierung (116) zwischen dessen hinterem Teil (112) und dessen vorderem Teil (114) versehen ist.

13. Klebeband gemäß Anspruch 10,
**dadurch gekennzeichnet**,
daß der Trägerstreifen (160) einen verlängerten Teil (162) aufweist, der sich über den vorderen Teil, worauf das Trennklebeband (190) angebracht ist, hinaus erstreckt;
daß das Trennklebeband (190) auf der äußeren Klebeseite (194) einen starkklebrigen Klebstoff und auf der inneren Klebeseite (192) einen schwachklebrigen Klebstoff aufweist;
und daß der Trägerstreifen (160) einen langen Streifen doppelseitiges Abdeckklebeband (200) aufweist, das an dem vorderen Ende des verlängerten Teils (162) des Trägerstreifens (160) angebracht ist.

14. Klebeband gemäß Anspruch 11,
**dadurch gekennzeichnet**,
daß das Trennklebeband (250) auf der inneren Klebeseite (252) einen starkklebrigen Klebstoff und auf der äußeren Klebeseite (254) einen schwachklebrigen Klebstoff aufweist;
daß das Klebeband ferner einen Abdeckstreifen (290) mit einer Innenfläche (296) und einer Außenfläche aufweist, der zum Bedecken eines vorderen Endes (232) des Trägerstreifens (230) vorgesehen ist;
einen Streifen doppelseitiges Löseklebeband (260) mit einer starkklebrigen äußeren Klebeseite (264) und einer schwachklebrigen inneren Klebeseite (262);
einen Streifen doppelseitiges Haftklebeband (270) mit einer starkklebrigen inneren Klebeseite (272) und einer schwachklebrigen äußeren Klebeseite (274);
einen Streifen doppelseitiges Sicherungsklebeband (280) mit starkklebrigem Klebstoff auf beiden Klebeseiten (282, 284);
daß das Löseklebeband (260) zwischen der Außenfläche (234) des Trägerstreifens (230) und der Innenfläche (296) des Abdeckstreifens (290) nahe dem hinteren Ende (292) des Abdeckstreifens (290) angebracht ist, so daß die schwachklebrige innere Klebeseite (262) des Löseklebebandes (260) mit der Außenfläche (234) des Trägerstreifens (230) in Kontakt kommt;
daß das Haftklebeband (270) zwischen der Außenfläche des Trägerstreifens (234) und der Innenfläche (296) des Abdeckstreifens (290) nahe dem vorderen Ende (232) des Trägerstreifens (230) angebracht ist, so daß die starkklebrige innere Klebeseite (272) des Haftklebebandes (270) mit der Außenfläche (234) des Trägerstreifens (230) in Kontakt kommt; und
daß das Sicherungsklebeband (280) auf der Innenfläche des Abdeckstreifens (296) nahe dem vorderen Ende (294) des Abdeckstreifens (290) angebracht ist.

15. Klebeband gemäß Anspruch 6,
**dadurch gekennzeichnet,**
daß das dritte Mittel ein Klebstoff ist.

16. Klebeband gemäß Anspruch 6,
**dadurch gekennzeichnet,**
daß das erste Mittel und das dritte Mittel Klebstoffe sind.

17. Klebeband gemäß Anspruch 16,
**dadurch gekennzeichnet**,
daß das erste Mittel ein starkklebriger Klebstoff und das dritte Mittel ein schwachklebriger Klebstoff ist.

18. Klebeband gemäß Anspruch 6,
**dadurch gekennzeichnet**,
daß das erste Mittel, das zweite Mittel und das dritte Mittel Klebstoffe sind.

19. Klebeband gemäß Anspruch 18,
**dadurch gekennzeichnet,**
daß das erste und das zweite Mittel starkklebrige Klebstoffe sind, und das dritte Mittel ein schwachklebriger Klebstoff ist.
